# EUROPEAN PATENT APPLICATION

(11) **EP 4 840 663 A1**
(43) Date of publication of application: **18.11.2026**
(21) Application number: 26179078.6
(22) Date of filing: 15.05.2026
(51) Int. Cl.: B60K 6/26, B60K 6/36, B60K 6/52, B60K 6/365, B60K 6/387, B60K 6/442, B60K 6/445, B60K 6/448, B60W 10/02, B60W 10/06, B60W 10/08, B60W 10/107, B60W 20/10, B60W 20/20, B60W 20/40, B60K 1/00, B60K 6/48

(54) **DRIVE SYSTEM AND CONTROL METHOD THEREFOR, ELECTRONIC DEVICE, STORAGE MEDIUM, AND VEHICLE**

(30) Priority: 16.05.2025 CN 202510638429
(71) Applicant: BYD Company Limited, Shenzhen, Guangdong 518118 (CN)
(72) Inventor: YANG, Dongsheng, Shenzhen, 518118 (CN); LU, Guoxiang, Shenzhen, 518118 (CN); ZHANG, Hui, Shenzhen, 518118 (CN); LU, Chao, Shenzhen, 518118 (CN)
(74) Representative: Mathys & Squire

(57) **Abstract**

This application discloses a drive system and a control method therefor, an electronic device, a storage medium, and a vehicle, relating to the field of vehicle technologies and intended to resolve a problem of how to improve energy utilization of the drive system. The drive system is used in the vehicle. The drive system may include a first transmission assembly. The first transmission assembly is configured to be connected between an engine, a generator, and a first motor. According to a power generation requirement of the vehicle, the first transmission assembly selectively causes the engine to drive the generator and/or the first motor to generate electricity, to enable the drive system to switch between a plurality of power generation modes.

## Description

### TECHNICAL FIELD

This application relates to the field of vehicle technologies, and in particular, to a drive system and a control method therefor, an electronic device, a storage medium, and a vehicle.

### BACKGROUND

As energy and environmental problems become increasingly severe, people pay increasing attention to global environment and climate protection. Development of electric vehicles has attracted significant attention due to advantages of energy saving and environmental friendliness of the electric vehicles over fuel vehicles.

A vehicle controls conversion and transmission of power of the vehicle through a drive system. The efficient use of energy by the drive system is the core of energy saving of the vehicle.

In conventional technologies, during running of the drive system of the vehicle, energy generated by the drive system may exceed the actual electricity consumption requirement of the vehicle due to running efficiency of a motor, leading to energy redundancy and resulting in energy waste.

### SUMMARY

An objective of this application is to provide a drive system and a control method therefor, an electronic device, a storage medium, and a vehicle, which are intended to resolve a problem of how to improve energy utilization of the drive system.

According to a first aspect, this application provides a drive system, which is used in a vehicle. The drive system may include a first transmission assembly. The first transmission assembly is configured to be connected between an engine, a generator, and a first motor. According to a power generation requirement of the vehicle, the first transmission assembly selectively causes the engine to drive the generator and/or the first motor to generate electricity, to enable the drive system to switch between a plurality of power generation modes.

In this way, the first transmission assembly is connected between the engine, the generator, and the first motor, and the first transmission assembly may be configured to: receive mechanical energy that is output by the engine, and transmit the mechanical energy to the generator and/or the first motor, so that the generator and/or the first motor can generate electricity.

According to the power generation requirement of the vehicle, the first transmission assembly may be adjusted, so that the drive system can selectively switch to the plurality of power generation modes. In this way, the generator and/or the first motor can convert the mechanical energy into electric energy that meets the requirement of the vehicle, so that the engine generates mechanical energy that meets an electric energy requirement, to reduce waste caused by consuming excessive fuel by the engine and waste caused by electricity redundancy, thereby implementing energy saving and consumption reduction of the drive system.

Optionally, according to the power generation requirement of the vehicle, the first transmission assembly selectively causes the drive system to switch between a first power generation mode, a second power generation mode, and a third power generation mode. In the first power generation mode, the first transmission assembly connects the engine to the generator through transmission, to enable the engine to drive the generator to generate electricity; in the second power generation mode, the first transmission assembly connects the engine to the first motor through transmission, to enable the engine to drive the first motor to generate electricity; or in the third power generation mode, the first transmission assembly connects the engine to the generator and the first motor through transmission, to enable the engine to drive the generator and the first motor to generate electricity.

Optionally, the first transmission assembly can switch between a first state and a second state. In the first state, the first transmission assembly connects the engine to the generator through transmission, to enable the drive system to be in the first power generation mode; or in the second state, the first transmission assembly connects the engine to the generator through transmission, and connects the engine to the first motor through transmission, to enable the drive system to be in the second power generation mode or the third power generation mode.

Optionally, the drive system further includes a control apparatus, and the control apparatus is configured to be connected to the generator. In the second state, the engine drives the first motor to generate electricity, and the control apparatus controls the generator not to generate electricity, to enable the drive system to be in the second power generation mode; or in the second state, the engine drives the first motor to generate electricity, and the control apparatus controls the generator to generate electricity, to enable the drive system to be in the third power generation mode.

Optionally, the drive system may further include a first set of wheel ends. The first set of wheel ends is configured to be connected to a first set of wheels of the vehicle. The first transmission assembly is further connected to the first set of wheel ends, to enable the engine and/or the first motor to drive, through the first transmission assembly, the first set of wheel ends to rotate.

Optionally, the first transmission assembly includes a first coupling apparatus. The first coupling apparatus includes a first coupling portion and a second coupling portion. The first coupling portion is connected between the engine and the generator, and the second coupling portion is in transmission connection to the first motor. The second coupling portion can be connected to or separated from the first coupling portion, to enable the first transmission assembly to switch between the first state and the second state.

Optionally, the first transmission assembly further includes a first transmission structure, a second transmission structure, and a second coupling apparatus. An input member of the first transmission structure is in transmission connection to the second coupling portion, and an output member of the first transmission structure is in transmission connection to the first motor. An output member of the second transmission structure is in transmission connection to the first set of wheel ends. The second coupling apparatus is connected between the output member of the first transmission structure and an input member of the second transmission structure.

Optionally, the first transmission assembly further has a third state. In the third state, the first transmission assembly connects the engine to the first motor through transmission, and disconnects the engine from the generator, to enable the drive system to operate in the second power generation mode.

Optionally, the drive system further includes a second set of wheel ends and a second transmission assembly. The second set of wheel ends is configured to be connected to a second set of wheels of the vehicle. The second transmission assembly is configured to be connected between the second motor and the second set of wheel ends.

Optionally, the drive system further includes a battery pack. The battery pack is connected to the generator, the first motor, and the second motor.

Optionally, the drive system further includes a control apparatus. The control apparatus is connected to the generator, the first motor, the second motor, and the battery pack. The control apparatus is configured to: in the first power generation mode, transmit electricity generated by the generator to the battery pack; in the second power generation mode, transmit electricity generated by the first motor to the battery pack; or in the third power generation mode, transmit electricity generated by the generator and the first motor to the battery pack, and be capable of transmitting electricity from the battery pack to the first motor and/or the second motor.

According to a second aspect, this application further provides a control method for a drive system. The control method is applied to any one of the foregoing drive systems. The control method includes: controlling, according to a power generation requirement of a vehicle, the drive system to switch between a plurality of power generation modes.

Optionally, the first transmission assembly enables the drive system to have a first power generation mode, a second power generation mode, and a third power generation mode. Controlling, according to the power generation requirement of the vehicle, the drive system to switch between the plurality of power generation modes includes: controlling, according to the power generation requirement of the vehicle, the drive system to switch between the first power generation mode, the second power generation mode, and the third power generation mode.

Optionally, controlling, according to the power generation requirement of the vehicle, the drive system to switch between the first power generation mode, the second power generation mode, and the third power generation mode includes: when the power generation requirement of the vehicle is less than a power generation capacity of a generator in an efficient range, controlling the drive system to switch to the first power generation mode, and controlling the generator to generate electricity in the efficient range of the generator.

Optionally, controlling, according to the power generation requirement of the vehicle, the drive system to switch between the first power generation mode, the second power generation mode, and the third power generation mode further includes: when the power generation requirement of the vehicle exceeds the power generation capacity of the generator in the efficient range, if a first motor is in a driving operating state, controlling the drive system to switch to the first power generation mode, and controlling the generator to run at a first rotational speed and generate electricity, where the first rotational speed is greater than a rotational speed at which the generator is in the efficient range; or controlling, if a first motor is not in a driving operating state, the drive system to switch to the second power generation mode or the third power generation mode.

Optionally, controlling, if the first motor is not in the driving operating state, the drive system to switch to the second power generation mode or the third power generation mode includes: when the power generation requirement of the vehicle is less than a power generation capacity of the first motor in an efficient range, controlling the drive system to switch to the second power generation mode, and controlling the first motor to generate electricity in the efficient range of the first motor.

Optionally, controlling, if the first motor is not in the driving operating state, the drive system to switch to the second power generation mode or the third power generation mode further includes: when the power generation requirement of the vehicle exceeds the power generation capacity of the first motor in the efficient range, controlling, based on a maximum power generation capacity of the first motor, the drive system to switch to the second power generation mode or the third power generation mode.

Optionally, controlling, based on the maximum power generation capacity of the first motor, the drive system to switch to the second power generation mode or the third power generation mode includes: when the power generation requirement of the vehicle is less than the maximum power generation capacity of the first motor, comparing power generation efficiency of the first motor with total power generation efficiency present when the generator is in the efficient range and the first motor is in the efficient range; and
if the power generation efficiency of the first motor is greater than the total power generation efficiency present when the generator is in the efficient range and the first motor is in the efficient range, controlling the drive system to switch to the second power generation mode, and controlling the first motor to run at a second rotational speed and generate electricity, where the second rotational speed is greater than a rotational speed at which the first motor is in the efficient range; or if the power generation efficiency of the first motor is less than the total power generation efficiency present when the generator is in the efficient range and the first motor is in the efficient range, controlling the drive system to switch to the third power generation mode, and controlling each of the generator and the first motor to generate electricity in the efficient range.

Optionally, controlling, based on the maximum power generation capacity of the first motor, the drive system to switch to the second power generation mode or the third power generation mode further includes: when the power generation requirement of the vehicle exceeds the maximum power generation capacity of the first motor, controlling the drive system to switch to the third power generation mode.

According to a third aspect, this application further provides an electronic device. The electronic device includes a processor and a memory connected to the processor. The memory is configured to store computer instructions, and the computer instructions are loaded and executed by the processor, to enable the electronic device to implement the control method according to the second aspect.

According to a fourth aspect, this application provides a computer-readable storage medium. The computer-readable storage medium stores computer instructions. When the computer instructions are run on a computer, the computer is enabled to perform the control method according to the second aspect.

According to a fifth aspect, this application provides a vehicle. The vehicle includes the drive system according to the first aspect, the electronic device according to the third aspect, or the computer-readable storage medium according to the fourth aspect.

According to a sixth aspect, this application provides a computer program product. The computer program product includes computer instructions. When the computer instructions are run on a computer, the computer is enabled to perform the method according to the second aspect.

### BRIEF DESCRIPTION OF DRAWINGS

To describe technical solutions in embodiments of this application more clearly, the following briefly describes the accompanying drawings required for describing embodiments of this application. It is clear that the accompanying drawings in the following descriptions show merely some embodiments of this application, and a person of ordinary skill in the art may still derive other drawings from these accompanying drawings without creative efforts.
FIG. 1 is a diagram of a structure of a vehicle according to an embodiment of this application;
FIG. 2 is a diagram of a structure of a drive system according to an embodiment of this application;
FIG. 3 is a diagram of a structure of series rear-wheel drive of the drive system shown in FIG. 2 in a first power generation mode;
FIG. 4 is a diagram of a structure of series rear-wheel drive of the drive system shown in FIG. 2 in a second power generation mode;
FIG. 5 is a diagram of a structure of series rear-wheel drive of the drive system shown in FIG. 2 in a third power generation mode;
FIG. 6 is a diagram of a structure of parallel front-wheel drive of the drive system shown in FIG. 2 in a first power generation mode;
FIG. 7 is a diagram of a structure of parallel front-wheel drive of the drive system shown in FIG. 2 in a second power generation mode;
FIG. 8 is a diagram of a structure of parallel front-wheel drive of the drive system shown in FIG. 2 in a third power generation mode;
FIG. 9 is a diagram of a structure of parallel four-wheel drive of the drive system shown in FIG. 2 in a first power generation mode;
FIG. 10 is a diagram of a structure of parallel four-wheel drive of the drive system shown in FIG. 2 in a second power generation mode;
FIG. 11 is a diagram of a structure of parallel four-wheel drive of the drive system shown in FIG. 2 in a third power generation mode; and
FIG. 12A and FIG. 12B are a diagram of a control method for a drive system according to an embodiment of this application.

### Reference numerals:

1000: vehicle; 100: vehicle body; 200: wheel; 300: drive system;
1: engine; 2: generator; 3: first motor; 4: first transmission assembly; 41: first transmission structure; 411: input member of a first transmission structure; 412: output member of a first transmission structure; 42: second transmission structure; 421: input member of a second transmission structure; 422: output member of a second transmission structure; 5: control apparatus; 6: first coupling apparatus. 61: first coupling portion; 62: second coupling portion; 7: first set of wheel ends; 8: first set of wheels; 9: second coupling apparatus; 10: second motor; 11: second set of wheel ends; 12: second set of wheels; 13: second transmission assembly; 14: battery pack.

### DESCRIPTION OF EMBODIMENTS

The terms "first", "second", and "third" in embodiments of this application are merely intended for a purpose of description, and will not be understood as an indication or implication of relative importance or implicit indication of a quantity of indicated technical features. Therefore, a feature limited by "first", "second", or "third" may explicitly or implicitly include one or more features.

In embodiments of this application, the term "include", "comprise", or any other variant thereof is intended to cover a non-exclusive inclusion, so that a process, a method, an object, or an apparatus that includes a series of elements includes both those elements, and other elements that are not expressly listed, or further includes elements inherent to such a process, method, object, or apparatus. Without further limitations, an element defined by the statement "include a/an ..." does not exclude the presence of additional identical elements in the process, method, object, or apparatus that includes the element.

"A and/or B" includes the following three combinations: only A, only B, and a combination of A and B.

An embodiment of this application provides a power-consuming device. The power-consuming device may be a vehicle, a ship, an aircraft, an industrial device, an agricultural machine, an urban emergency power system, or the like. Embodiments of this application are described in detail by using an example in which the power-consuming device is a vehicle.

The vehicle may be a hybrid electric vehicle, a range extended electric vehicle, a plug-in hybrid electric vehicle, a pure electric vehicle, or the like. The vehicle may alternatively be an engineering vehicle, a special-purpose operation vehicle, or the like.

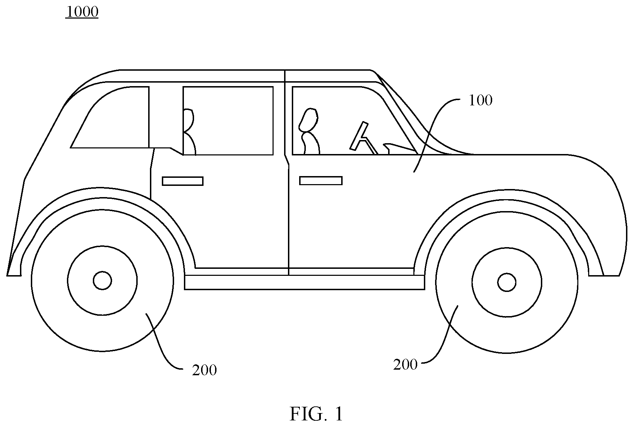

Referring to FIG. 1, FIG. 1 is a diagram of a structure of a vehicle 1000 according to an embodiment of this application. The vehicle 1000 may include a vehicle body 100 and wheels 200. The vehicle body 100 is used for an occupant to drive or ride, and is used to carry an object. The wheels 200 are mounted below the vehicle body 100 and configured to carry the vehicle body 100, and can roll on a road surface to enable the vehicle 1000 to travel.

The vehicle 1000 may further include a drive system. The drive system is a power source and power transmission apparatus of the vehicle 1000, and is configured to provide power for the vehicle 1000 to drive the wheels 200 to drive the vehicle body 100 to move. The vehicle 1000 may further include an electrical system, and the electrical system may include a lighting system, an instrument system, an auxiliary electrical system, and the like. The vehicle 1000 may further include a vehicle frame, which is configured to carry components such as the vehicle body 100, the drive system, and the electrical system.

The vehicle 1000 may further include a control system. The control system may be connected to the drive system, the electrical system, and the like, to help the occupant control the vehicle 1000, for example, control the drive system to make the vehicle 1000 travel in a specified direction and at a specified speed or control turning on/off a vehicle light, raising/lowering a vehicle window, activating a wiper, or the like.

Because the drive system is used as the power source and the power transmission apparatus of the vehicle 1000, to implement energy saving and consumption reduction of the vehicle 1000, power conversion efficiency and power transmission efficiency of the vehicle 1000 need to be improved to a greater extent, to reduce energy waste and implement environmental friendliness.

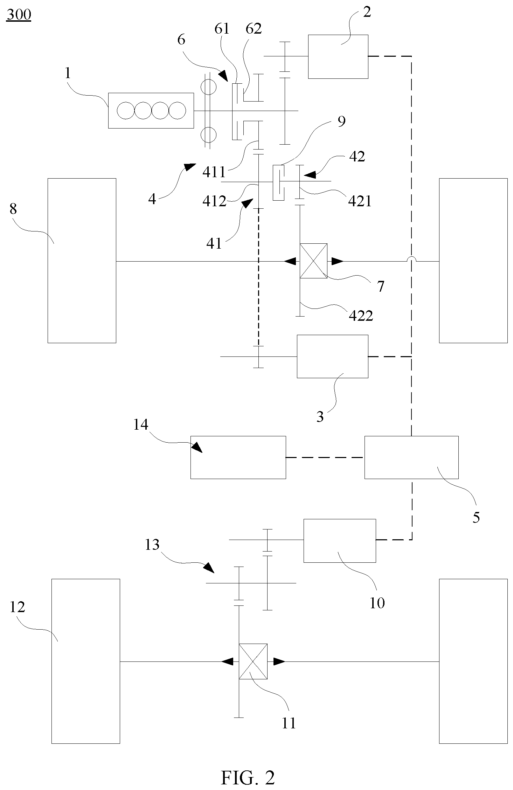

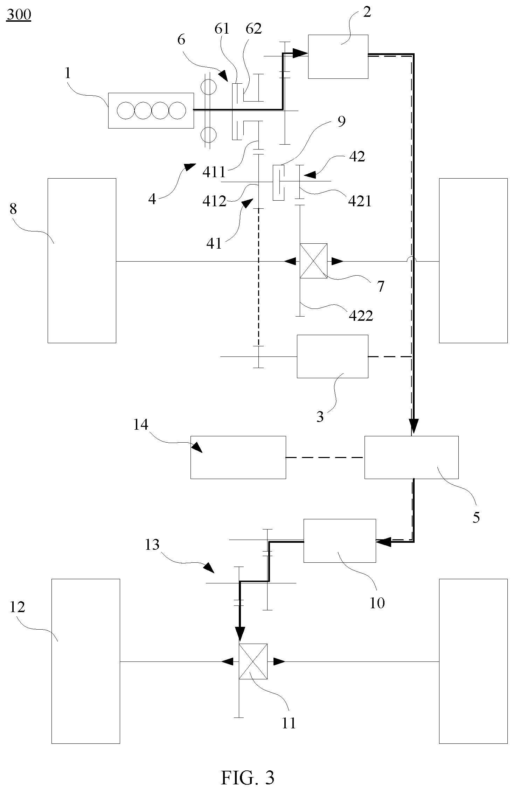

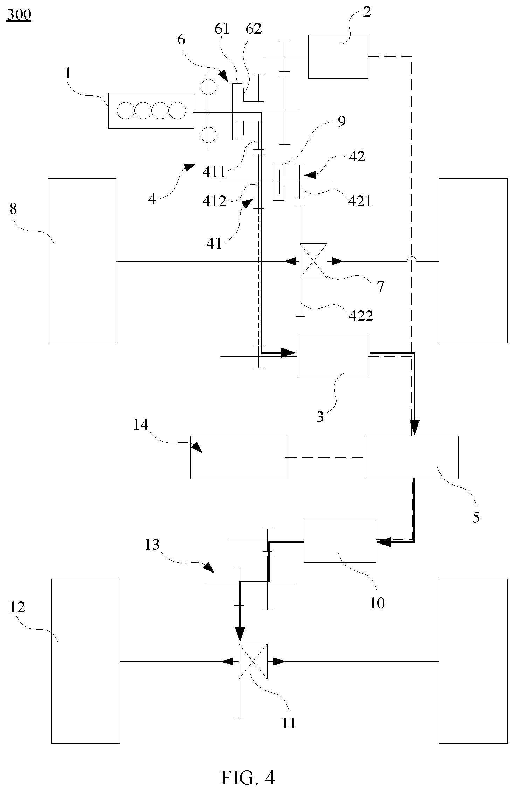

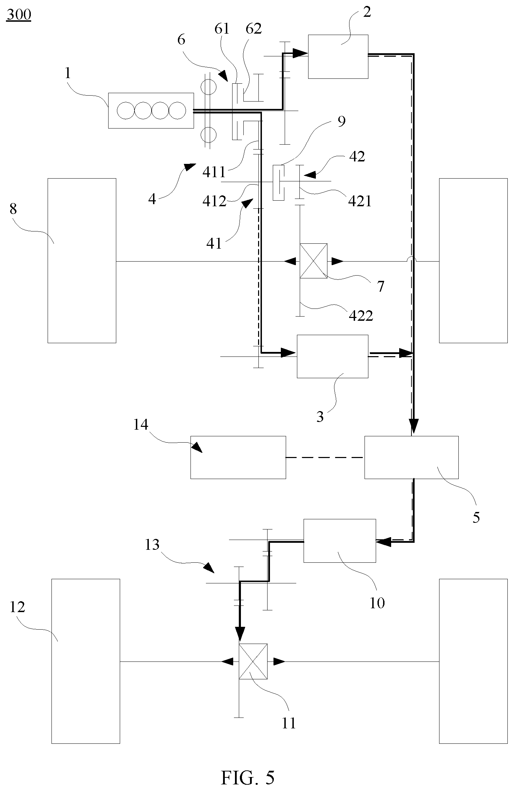

Referring to FIG. 2 to FIG. 5, FIG. 2 is a diagram of a structure of a drive system 300 according to an embodiment of this application. FIG. 3 is a diagram of a structure of the drive system shown in FIG. 2 in a first power generation mode. FIG. 4 is a diagram of a structure of the drive system shown in FIG. 2 in a second power generation mode. FIG. 5 is a diagram of a structure of the drive system shown in FIG. 2 in a third power generation mode. In some embodiments of this application, a vehicle 1000 may include an engine 1. The engine 1 is used for energy conversion, and may convert chemical energy of fuel into mechanical energy to provide power for the vehicle.

The vehicle 1000 may further include a generator 2. The generator 2 may convert mechanical energy generated by the engine 1 into electric energy, to provide electrical support for an electrical system of the vehicle.

The vehicle 1000 may further include a first motor 3. In a working condition, the first motor 3 may be a drive motor, which is configured to: receive electric energy, and convert the electric energy into mechanical energy, to drive a wheel to rotate. In another working condition, the first motor 3 may alternatively perform a function of generating electricity, and is configured to: receive mechanical energy that is output by the engine 1, and convert the mechanical energy into electric energy.

The drive system 300 provided in this embodiment of this application may include a first transmission assembly 4. The first transmission assembly 4 is configured to be connected between the engine 1, the generator 2, and the first motor 3. According to a power generation requirement of the vehicle, the first transmission assembly 4 selectively causes the engine 1 to drive the generator 2 and/or the first motor 3 to generate electricity, to enable the drive system to switch between a plurality of power generation modes.

In this way, the first transmission assembly 4 is connected between the engine 1, the generator 2, and the first motor 3, and the first transmission assembly 4 may be configured to: receive the mechanical energy that is output by the engine 1, and transmit the mechanical energy to the generator 2 and/or the first motor 3, so that the generator 2 and/or the first motor 3 can generate electricity.

According to the power generation requirement of the vehicle, the first transmission assembly 4 may be adjusted, so that the drive system 300 can selectively switch to the plurality of power generation modes. In this way, the generator 2 and/or the first motor 3 can convert the mechanical energy into electric energy that meets the requirement of the vehicle, so that the engine 1 generates mechanical energy that meets an electric energy requirement, to reduce waste caused by consuming excessive fuel by the engine 1 and waste caused by electricity redundancy, thereby implementing energy saving and consumption reduction of the drive system 300.

In some embodiments, according to the power generation requirement of the vehicle, the first transmission assembly 4 may selectively cause the drive system to switch between a first power generation mode, a second power generation mode, and a third power generation mode. In the first power generation mode, the first transmission assembly 4 connects the engine 1 to the generator 2 through transmission, to enable the engine 1 to drive the generator 2 to generate electricity; in the second power generation mode, the first transmission assembly 4 connects the engine 1 to the first motor 3 through transmission, to enable the engine 1 to drive the first motor 3 to generate electricity; or in the third power generation mode, the first transmission assembly 4 connects the engine 1 to the generator 2 and the first motor 3 through transmission, to enable the engine 1 to drive the generator 2 and the first motor 3 to generate electricity.

In this way, according to the power generation requirement of the vehicle, the first transmission assembly 4 can adjust a connection status of the engine 1 to the generator 2 and the first motor 3, so that the drive system 300 can selectively switch to the first power generation mode, the second power generation mode, or the third power generation mode. In this way, the generator 2 or the first motor 3 can convert the mechanical energy into the electric energy that meets the requirement of the vehicle, so that the engine 1 generates the mechanical energy that meets the electric energy requirement, to reduce the waste caused by consuming the excessive fuel by the engine 1 and the waste caused by the electricity redundancy, thereby implementing energy saving and consumption reduction of the drive system 300.

In some embodiments, the first transmission assembly 4 can switch between a first state and a second state. In the first state, the first transmission assembly 4 connects the engine 1 to the generator 2 through transmission, to enable the drive system 300 to be in the first power generation mode; or in the second state, the first transmission assembly 4 connects the engine 1 to the generator 2 through transmission, and connects the engine 1 to the first motor 3 through transmission, to enable the drive system 300 to be in the second power generation mode or the third power generation mode.

In the first state, the first transmission assembly 4 may connect the engine 1 to the generator 2 through transmission, and the mechanical energy that is output by the engine 1 may be transmitted to the generator 2 through the first transmission assembly 4, so that the generator 2 can generate electricity. In the second state, the first transmission assembly 4 may connect the engine 1 to the generator 2 through transmission, and the first transmission assembly 4 may connect the engine 1 to the first motor 3 through transmission. In this way, the mechanical energy that is output by the engine 1 can be transmitted to the generator 2 through the first transmission assembly 4, and can also be transmitted to the first motor 3 through the first transmission assembly 4, so that the generator 2 and/or the first motor 3 can generate electricity.

In this way, according to the power generation requirement of the vehicle, the first state and the second state of the first transmission assembly 4 are switched, so that the drive motor can switch between the first power generation mode, and the second power generation mode or the third power generation mode, to adjust power generation capacity of the drive system 300, so that the power generation capacity meets the power generation requirement of the vehicle, thereby reducing an energy loss and energy waste.

In some other embodiments, the drive system 300 may include the first transmission assembly 4. The first transmission assembly 4 may connect the engine 1 to the generator 2 and connect the engine 1 to the first motor 3. At least one of the generator 2 and the first motor 3 is controlled to generate electricity or stop generating electricity, so that the drive system 300 can be controlled to switch between the first power generation mode, the second power generation mode, and the third power generation mode.

In some other embodiments, the first transmission assembly 4 is connected between the engine 1, the generator 2, and the first motor 3. The first transmission assembly 4 may include a first transmission member and a second transmission member, the first transmission member is connected to the engine 1 and the generator 2, and the second transmission member is connected to the engine 1 and the first motor 3. In this way, when the drive system 300 needs to operate in the first power generation mode, the mechanical energy from the engine 1 is transmitted through the first transmission member, when the drive system 300 needs to operate in the second power generation mode, the mechanical energy from the engine 1 is transmitted through the second transmission member, and when the drive system 300 needs to operate in the third power generation mode, through the first transmission member and the second transmission member simultaneously, the mechanical energy from the engine 1 may cause the generator 2 and the first motor 3 to generate electricity.

When the first transmission assembly 4 is in the first state, the first transmission assembly 4 may connect the engine 1 to the generator 2 through transmission, and the mechanical energy that is output by the engine 1 is transmitted to the generator 2 through the first transmission assembly 4, so that the generator 2 can generate electricity. When the first transmission assembly 4 is in the second state, the first transmission assembly 4 may connect the engine 1 to the generator 2 through transmission, and may connect the engine 1 to the first motor 3 through transmission, so that the drive system 300 can operate in the second power generation mode, or can operate in the third power generation mode. In this case, the drive system 300 needs to select one from the second power generation mode and the third power generation mode.

Still referring to FIG. 3 to FIG. 5, in some embodiments of this application, the drive system 300 may further include a control apparatus 5. The control apparatus 5 is configured to be connected to the generator 2, and the control apparatus 5 may control the first motor 3 to generate electricity or not to generate electricity. In the second state, the engine 1 drives the first motor 3 to generate electricity, and the control apparatus 5 controls the generator 2 to generate electricity, to enable the drive system 300 to be in the third power generation mode; or in the second state, the engine 1 drives the first motor 3 to generate electricity, and the control apparatus 5 controls the generator 2 not to generate electricity, to enable the drive system 300 to be in the second power generation mode.

Because the control apparatus 5 is connected to the generator 2, the control apparatus 5 may control a power generation mode of the generator 2, and in the second state, the control apparatus 5 may control the generator 2 to convert mechanical energy into electric energy, so that the generator 2 can generate electricity. In this way, both the generator 2 and the first motor 3 can generate electricity, causing the drive system 300 to operate in the third power generation mode. The control apparatus 5 may alternatively control the generator 2 to perform only mechanical rotation without energy conversion, that is, control the generator 2 to idle. In this case, only the first motor 3 can generate electricity, and the generator 2 does not generate electricity, causing the drive system 300 to operate in the second power generation mode.

In this way, the control apparatus 5 can control the first transmission assembly 4 to be in the second state, and the drive system 300 selects the second power generation mode or the third power generation mode to operate, so that the drive system 300 can select an appropriate power generation mode according to the power generation requirement of the vehicle, to improve energy utilization.

For example, a stator assembly of the generator 2 needs to be powered on to generate magnetism. If a current is supplied to the stator assembly, the stator assembly has magnetism, and when a rotor rotates relative to a stator, mechanical energy may be converted into electric energy, to generate electricity. If the stator assembly is not powered on, the stator assembly does not have magnetism, and when the rotor rotates relative to the stator, only mechanical rotation is performed without energy conversion, so that electricity is not generated.

When the first transmission assembly 4 is in the second state, and the control apparatus 5 controls the drive system 300 to be in the second power generation mode, because the generator 2 performs mechanical rotation without energy conversion, a loss of a part of energy may occur.

In some embodiments, a coupling structure may be added to the drive system 300, and the generator 2 is coupled to or decoupled from an energy recovery mechanism through the coupling structure, so that energy can be recovered when the generator 2 idles, to reduce an energy loss.

In some embodiments of this application, because both the generator 2 and the first motor 3 can generate electricity, and according to the power generation requirement of the vehicle 1000, the drive system 300 may generate electricity in different power generation modes. As a result, there is energy redundancy in the power generation capacity of the drive system 300 relative to the power generation requirement of the vehicle 1000. In this case, the generator 2 may be proportionally scaled down. For example, a structure and power of the generator 2 is proportionally reduced, so that the energy redundancy of the drive system 300 can be reduced. In addition, when the generator 2 needs to idle, because the structure of the generator 2 is reduced, mechanical energy consumed by idling of the generator 2 is reduced, thereby reducing the energy loss. Moreover, without adding the energy recovery mechanism, the structure of the drive system 300 may be simplified, and production costs can be reduced.

In some other embodiments, the drive system 300 may include a switching apparatus. The engine 1 and the generator 2 are disconnected or connected, so that power disconnection or transmission between the engine 1 and the generator 2 can be implemented, thereby implementing switching of the drive system 300 between the second power generation mode and the third power generation mode.

In some embodiments, the first transmission assembly 4 includes a first coupling apparatus 6. The first coupling apparatus 6 includes a first coupling portion 61 and a second coupling portion 62. The first coupling portion 61 is connected between the engine 1 and the generator 2, and the second coupling portion 62 is in transmission connection to the first motor 3. The second coupling portion 62 can be connected to or separated from the first coupling portion 61, to enable the first transmission assembly 4 to switch between the first state and the second state.

The first coupling portion 61 is connected between the engine 1 and the generator 2, so that the mechanical energy that is output by the engine 1 can be transmitted to the generator 2, to drive the generator 2 to generate electricity. The second coupling portion 62 is in transmission connection to the first motor 3. When the second coupling portion 62 is connected to the first coupling portion 61, the mechanical energy that is output by the engine 1 is transmitted to the first coupling portion 61, and may be transmitted to the generator 2 and the second coupling portion 62. The second coupling portion 62 transmits the mechanical energy to the first motor 3, so that the first motor 3 can convert the mechanical energy into electric energy, to enable the first motor 3 to generate electricity. In this case, the first transmission assembly 4 is in the second state. In other words, the engine 1 is connected to the generator 2, and the engine 1 is connected to the first motor 3. When the second coupling portion 62 is separated from the first coupling portion 61, the mechanical energy that is output by the engine 1 is transmitted only to the generator 2 through the first coupling portion 61, making the first transmission assembly 4 be in the first state. In this way, the drive system 300 can be controlled to switch between different power generation modes, so that the power generation capacity meets the power generation requirement, to reduce energy waste.

For example, the first coupling apparatus 6 may be a clutch, a first portion of the clutch may be the first coupling portion 61, and a second portion of the clutch may be the second coupling portion 62. A function of the first coupling apparatus 6 is implemented by combining the first portion and with second portion and separating the first portion from the second portion.

In some other embodiments, the engine 1 may include two output ends. A first output end is in transmission connection to the generator 2, and a second output end is in transmission connection to the first motor 3, so that the engine 1 can be connected to the generator 2 and/or the first motor 3.

In some embodiments, the first transmission assembly 4 further has a third state, and can switch between the first state, the second state, and the third state. In the third state, the first transmission assembly 4 connects the engine 1 to the first motor 3 through transmission, and disconnects the engine 1 from the generator 2, to enable the drive system 300 to operate in the second power generation mode.

In this way, the second power generation mode and the third power generation mode can be independent of each other. When the first transmission assembly 4 is in the first state, the first transmission assembly 4 connects the engine 1 to the generator 2 through transmission, and the drive system 300 is in the first power generation mode. When the first transmission assembly 4 is in the second state, the first transmission assembly 4 connects the engine 1 to the first motor 3 through transmission, and the drive system 300 is in the third power generation mode. When the first transmission assembly 4 is in the third state, the engine 1 is in transmission connection to the first motor 3, and the drive system 300 is in the second power generation mode.

In this way, the power generation mode of the drive system 300 can be clearer and can be controlled more conveniently. However, when the first transmission assembly 4 is in the third state, a connection between the engine 1 and the generator 2 may be broken. As a result, in comparison with disposition of the first transmission assembly 4 in the foregoing embodiment whose has only the first state and the second state, the redundant coupling apparatus needs to be added, or a more complex mechanical structure needs to be disposed, which increases specific production costs.

In some embodiments of this application, the drive system 300 may further include a first set of wheel ends 7. The first set of wheel ends 7 is configured to be connected to a first set of wheels 8 of the vehicle. The first transmission assembly 4 is further connected to the first set of wheel ends 7, to enable the engine 1 and/or the first motor 3 to drive, through the first transmission assembly 4, the first set of wheel ends 7 to rotate.

In this case, the first transmission assembly 4 may further connect the engine 1 to the first set of wheel ends 7 through transmission, so that the mechanical energy that is output by the engine 1 can be transmitted to the first set of wheel ends 7 to drive the first set of wheel ends to rotate. The first transmission assembly 4 may further connect the first motor 3 to the first set of wheel ends 7 through transmission, so that the first motor 3 can drive the first set of wheel ends 7 to rotate.

Because the first transmission assembly 4 can connect the engine 1 to the generator 2, and can also directly connect the engine 1 to the first set of wheel ends 7, the drive system 300 may have a parallel power generation mode. More specifically, the engine 1 may directly transmit the mechanical energy to the first set of wheel ends 7 to drive the first set of wheels 8 to rotate, and may also transmit the mechanical energy to the generator 2 and/or the first motor 3, so that the generator 2 and/or the first motor 3 can generate electricity.

When the first transmission assembly 4 connects the first motor 3 to the first set of wheel ends 7, if the first motor 3 is to be capable of directly driving the first set of wheel ends 7 to rotate, the first motor 3 should be in a driving motor working condition, that is, the first motor 3 may receive electric energy and convert the electric energy into mechanical energy, and the mechanical energy is transmitted to the first set of wheel ends 7 through the first transmission assembly 4 to drive the first set of wheel ends 7 to rotate, thereby driving the first set of wheels 8 to rotate.

Still referring to FIG. 3 to FIG. 5, in some embodiments, the first transmission assembly 4 further includes a first transmission structure 41, a second transmission structure 42, and a second coupling apparatus 9. An input member 411 of the first transmission structure is in transmission connection to the second coupling portion 62, and an output member 412 of the first transmission structure is in transmission connection to the first motor 3. An output member 422 of the second transmission structure is in transmission connection to the first set of wheel ends 7. The second coupling apparatus 9 is connected between the output member 412 of the first transmission structure and an input member 421 of the second transmission structure.

The first transmission structure 41 is configured to connect the second coupling portion 62 to the first motor 3 through transmission, so that power on the second coupling portion 62 can be transmitted to the first motor 3 through the first transmission structure 41. The second coupling apparatus 9 may be connected between the output member 412 of the first transmission structure and the input member 421 of the second transmission structure. In this way, when the second coupling apparatus 9 is coupled, power on the output member 412 of the first transmission structure can be transmitted to the input member 421 of the second transmission structure through the second coupling apparatus 9. The output member 422 of the second transmission structure is connected to the first set of wheel ends 7, so that the first set of wheel ends 7 can be driven to rotate, to drive the first set of wheels 8 to rotate. When the second coupling apparatus 9 is decoupled, the output member 412 of the first transmission structure is disconnected from the input member 421 of the second transmission structure, and the power on the output member 412 of the first transmission structure is no longer transmitted to the second transmission structure 42. In this case, the drive system 300 does not drive the first set of wheel ends 7 to rotate.

Because the output member 412 of the first transmission structure is in transmission connection to the first motor 3, when the second coupling apparatus 9 is decoupled, the first motor 3 is also disconnected from the first set of wheel ends 7, and the first motor 3 cannot drive the first set of wheel ends 7 to rotate.

In some embodiments, the vehicle 1000 may further include a second motor 10, and the drive system 300 may further include a second set of wheel ends 11 and a second transmission assembly 13. The second set of wheel ends 11 is configured to be connected to a second set of wheels 12 of the vehicle. The second transmission assembly 13 is connected between the second motor 10 and the second set of wheel ends 11.

The second motor 10 may transmit generated mechanical energy to the second set of wheel ends 11 through the second transmission assembly 13 to drive the second set of wheel ends 11 to rotate, thereby driving the second set of wheels 12 to rotate, so that the vehicle can move.

In some embodiments, the drive system 300 may further include a battery pack 14. The battery pack 14 is connected to the generator 2, the first motor 3, and the second motor 10.

The battery pack 14 is connected to the generator 2, so that the generator 2 can charge the battery pack 14, and therefore, electric energy generated by the generator 2 can be stored, to facilitate control of the electrical system of the vehicle, and waste caused by electric energy redundancy can be reduced. The battery pack 14 is connected to the first motor 3, so that when the first motor 3 performs a power generation function, the battery pack 14 can be charged, and when the first motor 3 performs a driving function, the battery pack 14 can provide electric energy for the first motor 3, so that the first motor 3 can drive the first set of wheel ends 7 to rotate. The battery pack 14 is connected to the second motor 10, and may provide electric energy for the second motor 10, so that the second motor 10 can drive the second set of wheel ends 11 to rotate.

In some embodiments, the drive system 300 further includes a control apparatus 5. The control apparatus 5 is connected to the generator 2, the first motor 3, the second motor 10, and the battery pack 14. The control apparatus 5 is configured to: in the first power generation mode, transmit electricity generated by the generator 2 to the battery pack 14; in the second power generation mode, transmit electricity generated by the first motor 3 to the battery pack 14; or in the third power generation mode, transmit electricity generated by the generator 2 and the first motor 3 to the battery pack 14, and be capable of transmitting electricity from the battery pack 14 to the first motor 3 and/or the second motor 10.

The control apparatus 5 may distribute electric energy generated by the drive system 300, and control and adjust operating statuses of the generator 2, the first motor 3, and the second motor 10.

For example, the control apparatus 5 is connected to the generator 2 and the first motor 3, and may control the electric energy generated by the generator 2 and the first motor 3 to be transmitted to the battery pack 14 for storage, or to be directly transmitted to the electrical system to implement control of the electrical system. The control apparatus 5 is connected to the battery pack 14, the first motor 3, and the second motor 10, and when both the first motor 3 and the second motor 10 perform the driving function, may distribute the electric energy, and may control the operating statuses and efficiency of the first motor 3 and the second motor 10 separately, to reduce the waste loss.

Specifically, in the first power generation mode, the drive system 300 may have the following three operating states.

For a first series rear-wheel drive state, referring to FIG. 3, the first coupling portion 61 and the second coupling portion 62 of the first coupling apparatus 6 are separated, and the second coupling apparatus 9 is in a decoupling state. In this case, the engine 1 is in transmission connection to the generator 2 to drive the generator 2 to generate electricity. The engine 1 is separated from the first motor 3, and the engine 1 is separated from the first set of wheel ends 7, so that the electric energy generated by the generator 2 can be output to the battery pack 14, and through adjustment of the control apparatus 5, electric energy that is output by the battery pack 14 can be transmitted to the second motor 10, and the second motor 10 drives the second set of wheel ends 11 to rotate, to cause the vehicle 1000 to move.

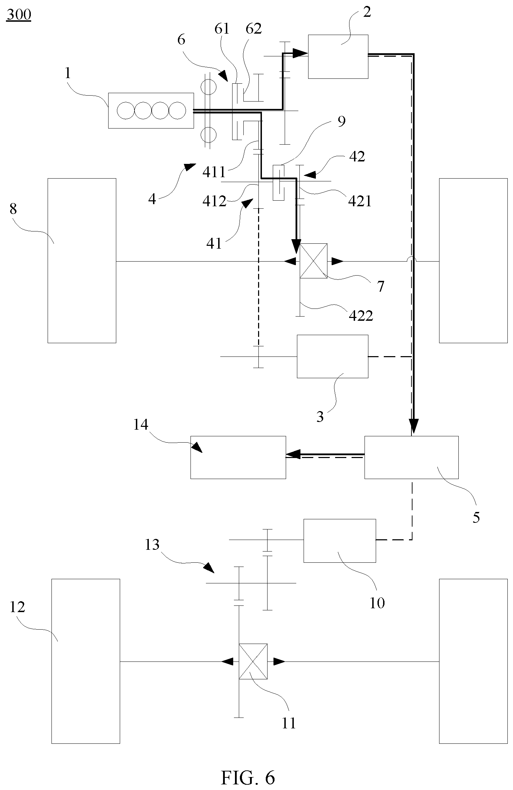

For a first parallel front-wheel drive state, referring to FIG. 6, FIG. 6 is a diagram of a structure of parallel front-wheel drive of the drive system 300 shown in FIG. 2 in the first power generation mode. The first coupling portion 61 and the second coupling portion 62 of the first coupling apparatus 6 are connected, and the second coupling apparatus 9 is in a coupling state. In this case, the engine 1 is in transmission connection to the generator 2 to drive the generator 2 to generate electricity. The first motor 3 does not generate electricity, and the engine 1 is connected to the first set of wheel ends 7, so that the electric energy generated by the generator 2 can be output to the battery pack 14 for storage, and the engine 1 can directly drive the first set of wheel ends 7 to rotate, to cause the vehicle 1000 to move.

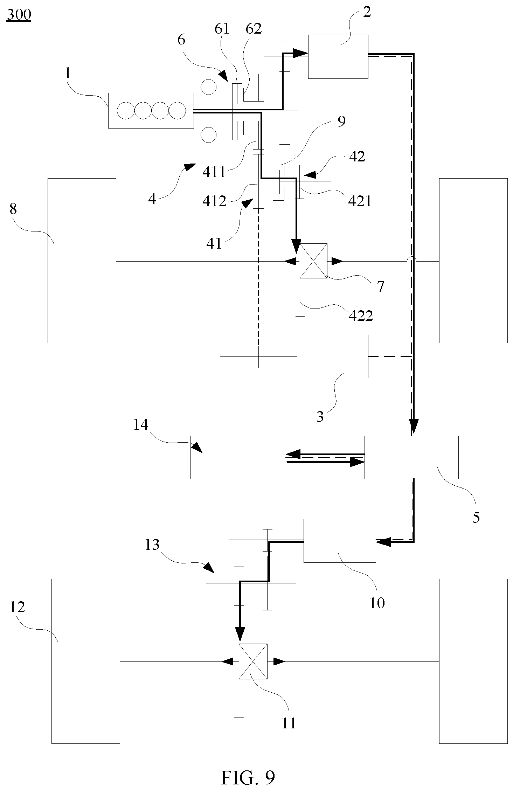

For a first parallel four-wheel drive state, referring to FIG. 9, FIG. 9 is a diagram of a structure of parallel four-wheel drive of the drive system 300 shown in FIG. 2 in the first power generation mode. The first coupling portion 61 and the second coupling portion 62 of the first coupling apparatus 6 are connected, and the second coupling apparatus 9 is in a coupling state. In this case, the engine 1 is in transmission connection to the generator 2 to drive the generator 2 to generate electricity. The first motor 3 does not generate electricity, the electric energy generated by the generator 2 may be output to the battery pack 14, and through adjustment of the control apparatus 5, electric energy that is output by the battery pack 14 may be transmitted to the second motor 10. The second motor 10 drives the second set of wheel ends 11 to rotate, and the engine 1 is connected to the first set of wheel ends 7, so that the engine 1 can directly drive the first set of wheel ends 7 to rotate.

In the second power generation mode, the drive system 300 may also have the following three operating states.

For a second series rear-wheel drive state, referring to FIG. 4, the first coupling portion 61 and the second coupling portion 62 of the first coupling apparatus 6 are connected, and the second coupling apparatus 9 is in a decoupling state. In this case, the engine 1 is in transmission connection to the first motor 3 to drive the first motor 3 to generate electricity. The engine 1 is separated from the first set of wheel ends 7, so that the electric energy generated by the first motor 3 can be output to the battery pack 14, and through adjustment of the control apparatus 5, electric energy that is output by the battery pack 14 can be transmitted to the second motor 10, and the second motor 10 drives the second set of wheel ends 11 to rotate, to cause the vehicle 1000 to move.

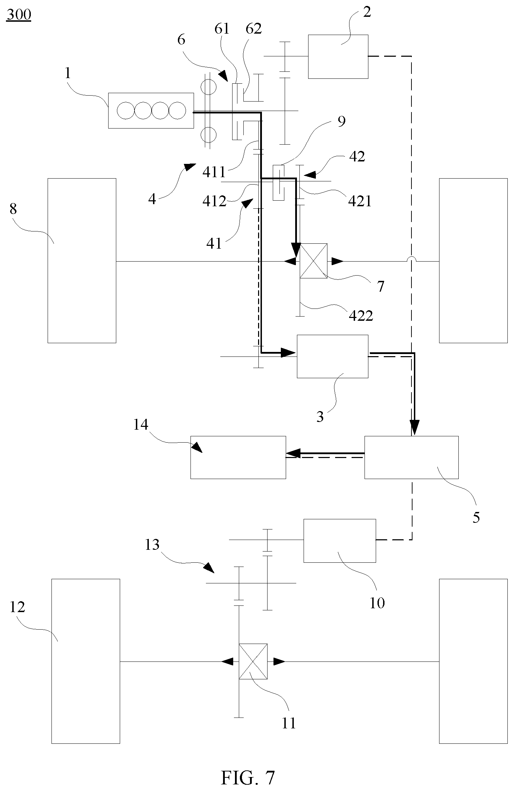

For a second parallel front-wheel drive state, referring to FIG. 7, FIG. 7 is a diagram of a structure of parallel front-wheel drive of the drive system 300 shown in FIG. 2 in the second power generation mode. The first coupling portion 61 and the second coupling portion 62 of the first coupling apparatus 6 are connected, and the second coupling apparatus 9 is in a coupling state. In this case, the engine 1 is in transmission connection to the first motor 3 to drive the first motor 3 to generate electricity. In addition, the engine 1 is connected to the first set of wheel ends 7, so that the electric energy generated by the first motor 3 can be output to the battery pack 14 for storage, and the engine 1 can directly drive the first set of wheel ends 7 to rotate, to cause the vehicle 1000 to move.

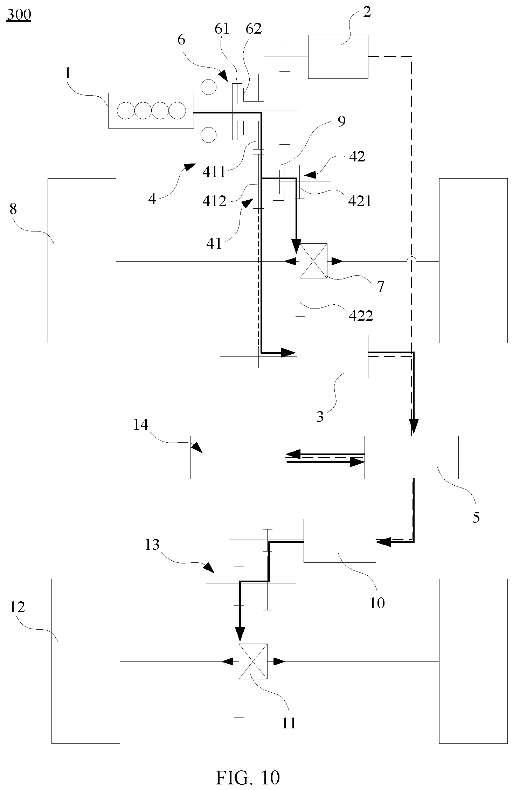

For a second parallel four-wheel drive state, referring to FIG. 10, FIG. 10 is a diagram of a structure of parallel four-wheel drive of the drive system 300 shown in FIG. 2 in the second power generation mode. The first coupling portion 61 and the second coupling portion 62 of the first coupling apparatus 6 are connected, and the second coupling apparatus 9 is in a coupling state. In this case, the engine 1 is in transmission connection to the first motor 3 to drive the first motor 3 to generate electricity. The electric energy generated by the first motor 3 may be output to the battery pack 14, and through adjustment of the control apparatus 5, electric energy that is output by the battery pack 14 may be transmitted to the second motor 10. The second motor 10 drives the second set of wheel ends 11 to rotate, and the engine 1 is connected to the first set of wheel ends 7, so that the engine 1 can directly drive the first set of wheel ends 7 to rotate.

In the third power generation mode, the drive system 300 may also have the following three operating states.

For a third series rear-wheel drive state, referring to FIG. 5, the first coupling portion 61 and the second coupling portion 62 of the first coupling apparatus 6 are connected, and the second coupling apparatus 9 is in a decoupling state. In this case, the engine 1 is in transmission connection to the generator 2 and the first motor 3 to drive the generator 2 and the first motor 3 to generate electricity. The engine 1 is separated from the first set of wheel ends 7, so that the electric energy generated by the generator 2 and the first motor 3 can be output to the battery pack 14, and through adjustment of the control apparatus 5, electric energy that is output by the battery pack 14 can be transmitted to the second motor 10, and the second motor 10 drives the second set of wheel ends 11 to rotate, to cause the vehicle 1000 to move.

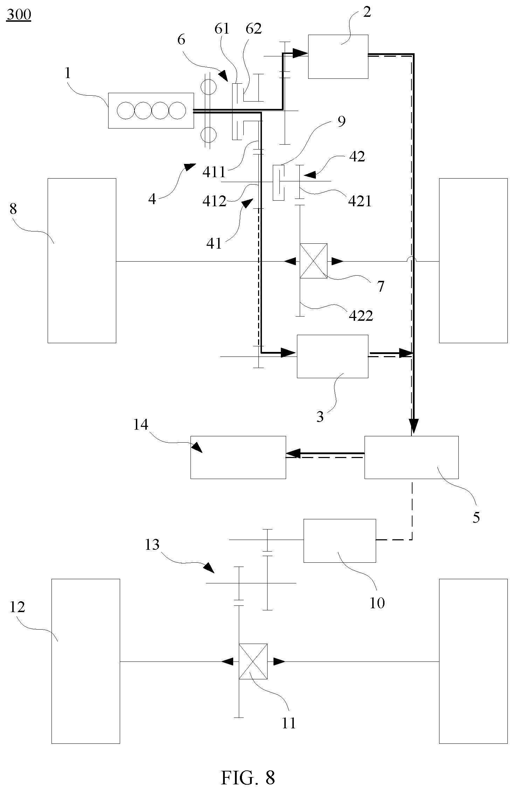

For a third parallel front-wheel drive state, referring to FIG. 8, FIG. 8 is a diagram of a structure of parallel front-wheel drive of the drive system 300 shown in FIG. 2 in the third power generation mode. The first coupling portion 61 and the second coupling portion 62 of the first coupling apparatus 6 are connected, and the second coupling apparatus 9 is in a coupling state. In this case, the engine 1 is in transmission connection to the generator 2 and the first motor 3 to drive the generator 2 and the first motor 3 to generate electricity. In addition, the engine 1 is connected to the first set of wheel ends 7, so that the electric energy generated by the generator 2 and the first motor 3 can be output to the battery pack 14 for storage, and the engine 1 can directly drive the first set of wheel ends 7 to rotate, to cause the vehicle 1000 to move.

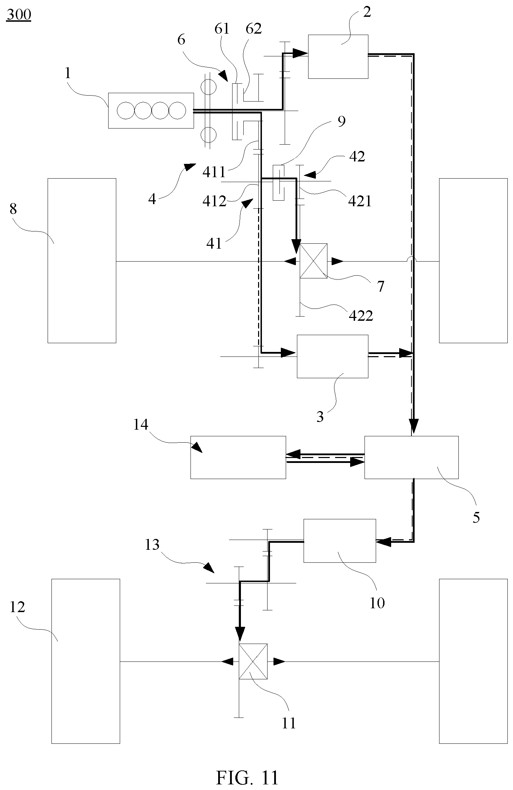

For a third parallel four-wheel drive state, referring to FIG. 11, FIG. 11 is a diagram of a structure of parallel four-wheel drive of the drive system 300 shown in FIG. 2 in the third power generation mode. The first coupling portion 61 and the second coupling portion 62 of the first coupling apparatus 6 are connected, and the second coupling apparatus 9 is in a coupling state. In this case, the engine 1 is in transmission connection to the generator 2 and the first motor 3 to drive the generator 2 and the first motor 3 to generate electricity. The electric energy generated by the generator 2 and the first motor 3 may be output to the battery pack 14, and through adjustment of the control apparatus 5, electric energy that is output by the battery pack 14 may be transmitted to the second motor 10. The second motor 10 drives the second set of wheel ends 11 to rotate, and the engine 1 is connected to the first set of wheel ends 7, so that the engine 1 can directly drive the first set of wheel ends 7 to rotate.

The drive system provided in this embodiment of this application may have but is not limited to the foregoing operating states, for example, including a series front-wheel drive state or a parallel rear-wheel drive state in the first power generation mode. This is not limited in this application.

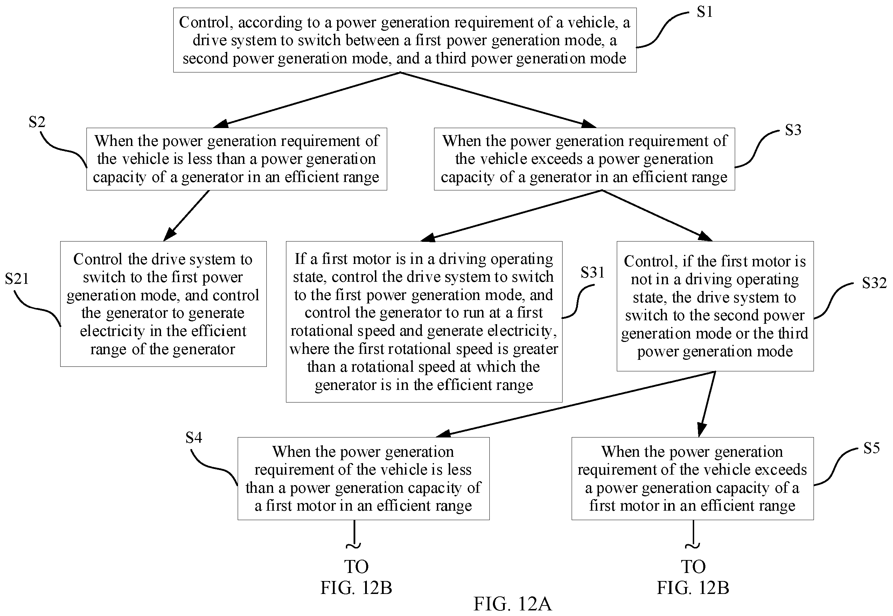

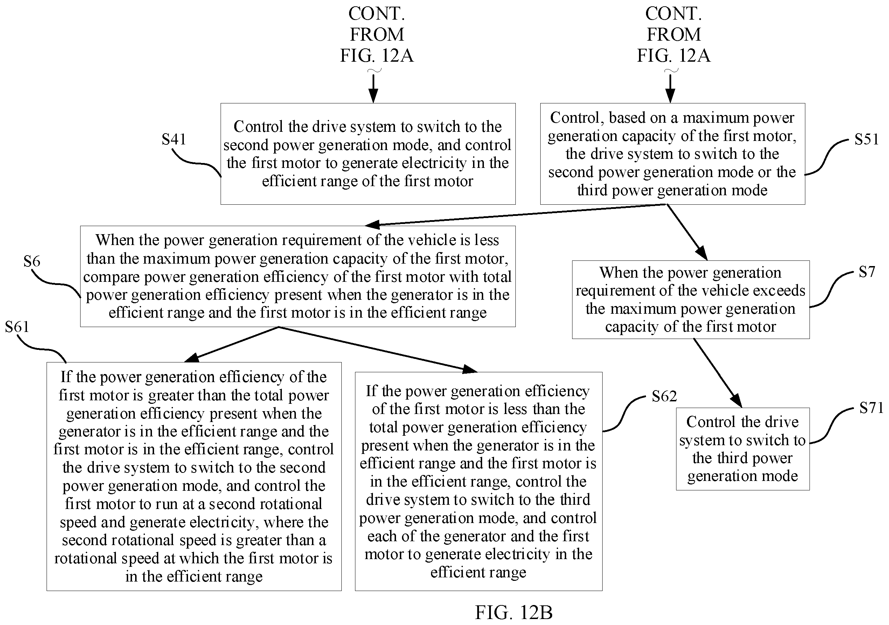

Referring to FIG. 12A and FIG. 12B, FIG. 12A and FIG. 12B are a diagram of a control method for a drive system 300 according to an embodiment of this application. This application further provides the control method for the drive system 300. The control method is applied to any one of the foregoing drive systems 300. The control method includes the following steps.

S01: control, according to a power generation requirement of a vehicle, the drive system 300 to switch between a plurality of power generation modes.

In this way, according to the power generation requirement of the vehicle 1000, the drive system 300 may selectively switch to the plurality of power generation modes. In this way, a generator 2 and/or a first motor 3 can convert mechanical energy into electric energy that meets the requirement of the vehicle 1000, so that the engine 1 generates mechanical energy that meets an electric energy requirement, to reduce waste caused by consuming excessive fuel by the engine 1 and waste caused by electricity redundancy, thereby implementing energy saving and consumption reduction of the drive system 300.

In some embodiments, the first transmission assembly 4 enables the drive system 300 to have a first power generation mode, a second power generation mode, and a third power generation mode. Controlling, according to the power generation requirement of the vehicle 1000, the drive system 300 to switch between the plurality of power generation modes in the step S01 may include the following step.

S1: control, according to the power generation requirement of the vehicle, the drive system 300 to switch between the first power generation mode, the second power generation mode, and the third power generation mode.

In this way, a power generation capacity of the drive system 300 can be adjusted, so that the generator 2 or the first motor 3 can convert the mechanical energy into the electric energy that meets the requirement of the vehicle, so that the engine 1 generates the mechanical energy that meets the electric energy requirement, to reduce the waste caused by consuming the excessive fuel by the engine 1 and waste caused by generating redundant electricity by the generator 2 or the first motor 3, thereby implementing energy saving and consumption reduction of the drive system 300.

In some embodiments, controlling, according to the power generation requirement of the vehicle, the drive system 300 to switch between the first power generation mode, the second power generation mode, and the third power generation mode in the step S1 may include the following step.
S2: when the power generation requirement of the vehicle is less than a power generation capacity of the generator 2 in an efficient range,
S21: control the drive system 300 to switch to the first power generation mode, and control the generator 2 to generate electricity in the efficient range of the generator 2.

When the power generation requirement of the vehicle is low, because only the generator 2 generates electricity when the drive system 300 is in the first power generation mode, only the first motor 3 generates electricity when the drive system 300 is in the second power generation mode, but in the first power generation mode, the first motor 3 does not receive mechanical energy from the engine 1 while in the second power generation mode, the generator 2 may receive the mechanical energy from the engine 1 without generating electricity, energy utilization of the drive system 300 in the first power generation mode is higher than energy utilization of the drive system 300 in the second power generation mode.

In this case, the power generation requirement of the vehicle may be first compared with a power generation capacity of the engine 1 in an efficient range. If the power generation capacity of the engine 1 in the efficient range can meet the power generation requirement of the vehicle, the drive system 300 may be controlled to switch to the first power generation mode, and the generator 2 may be controlled to generate electricity in the efficient range of the generator 2. In this way, power generation efficiency of the generator 2 is the highest, and when the same fuel is consumed, energy conversion efficiency of the drive system 300 is the highest, thereby maximizing the energy utilization.

If the power generation capacity of the engine 1 in the efficient range cannot meet the power generation requirement of the vehicle, in some embodiments, controlling, according to the power generation requirement of the vehicle, the drive system 300 to switch between the first power generation mode, the second power generation mode, and the third power generation mode in the step S1 may further include the following step.
S3: when the power generation requirement of the vehicle exceeds a power generation capacity of the generator 2 in an efficient range,
S31: if the first motor 3 is in a driving operating state, control the drive system 300 to switch to the first power generation mode, and control the generator 2 to run at a first rotational speed and generate electricity, where the first rotational speed is greater than a rotational speed at which the generator 2 is in the efficient range; or
S32: control, if the first motor 3 is not in a driving operating state, the drive system 300 to switch to the second power generation mode or the third power generation mode.

When the power generation capacity of the engine 1 in the efficient range cannot meet the power generation requirement of the vehicle, it needs to be determined whether the first motor 3 is in a power generation working condition or a driving working condition in this case. When the first motor 3 is in the driving working condition, the first motor 3 cannot generate power, and the drive system 300 still needs to keep in the first power generation mode. To meet the power generation requirement of the vehicle, a power generation capacity of the generator 2 needs to be improved, to enable the generator 2 to run at the first rotational speed and generate power. The first rotational speed is greater than the rotational speed at which the generator 2 is in the efficient range, and mechanical energy is higher, so that more electric energy can be converted, to meet the power generation requirement of the vehicle.

When the first motor 3 is not in the driving working condition, that is, in the power generation working condition, the first motor 3 may generate electricity, and the drive system 300 may be in the second power generation mode, to cause the first motor 3 to generate electricity and cause the generator 2 not to generate electricity; or the drive system 300 may be in the third power generation mode, to cause both the generator 2 and the first motor 3 to generate electricity.

In some embodiments, controlling, if the first motor 3 is not in the driving operating state, the drive system 300 to switch to the second power generation mode or the third power generation mode in the step S32 may include the following step.
S4: when the power generation requirement of the vehicle is less than a power generation capacity of the first motor 3 in an efficient range,
S41: control the drive system 300 to switch to the second power generation mode, and control the first motor 3 to generate electricity in the efficient range of the first motor 3.

When the power generation requirement of the vehicle is less than the power generation capacity of the first motor 3 in the efficient range, the drive system 300 may be controlled to switch to the second power generation mode, and the first motor 3 may be controlled to generate electricity in the efficient range of the first motor 3. In this way, power generation efficiency of the first motor 3 can be the highest, and when the same fuel is consumed and the power generation requirement of the vehicle is met, energy conversion efficiency of the drive system 300 is the highest, thereby maximizing energy utilization.

In some embodiments, controlling, if the first motor 3 is not in the driving operating state, the drive system 300 to switch to the second power generation mode or the third power generation mode in the step S32 may further include the following step.
S5: when the power generation requirement of the vehicle exceeds a power generation capacity of the first motor 3 in an efficient range,
S51: control, based on a maximum power generation capacity of the first motor 3, the drive system 300 to switch to the second power generation mode or the third power generation mode.

When the power generation requirement of the vehicle exceeds the power generation capacity of the first motor 3 in the efficient range, the power generation requirement of the vehicle may be compared with the maximum power generation capacity of the first motor 3, and the drive system 300 may be controlled to switch to the second power generation mode or the third power generation mode, to improve the energy utilization of the drive system 300.

In some embodiments, controlling, based on the maximum power generation capacity of the first motor 3, the drive system 300 to switch to the second power generation mode or the third power generation mode in the step S51 may include the following step.
S6: when the power generation requirement of the vehicle is less than the maximum power generation capacity of the first motor 3, compare power generation efficiency of the first motor 3 with total power generation efficiency present when the generator 2 is in the efficient range and the first motor 3 is in the efficient range.
S61: if the power generation efficiency of the first motor 3 is greater than the total power generation efficiency present when the generator 2 is in the efficient range and the first motor 3 is in the efficient range, control the drive system 300 to switch to the second power generation mode, and control the first motor 3 to run at a second rotational speed and generate electricity, where the second rotational speed is greater than a rotational speed at which the first motor 3 is in the efficient range; or
S62: if the power generation efficiency of the first motor 3 is less than the total power generation efficiency present when the generator 2 is in the efficient range and the first motor 3 is in the efficient range, control the drive system 300 to switch to the third power generation mode, and control each of the generator 2 and the first motor 3 to generate electricity in the efficient range.

When the power generation requirement of the vehicle is less than the maximum power generation capacity of the first motor 3, the drive system 300 may be in the second power generation mode, to cause the first motor 3 to generate electricity; or the drive system 300 may be in the third power generation mode, to cause both the first motor 3 and the generator 2 to generate electricity.

In this case, the power generation efficiency of the first motor 3 may be compared with the total power generation efficiency present when the generator 2 is in the efficient range and the first motor 3 is in the efficient range, and a power generation mode with higher efficiency between the power generation efficiency of the first motor 3 and the total power generation efficiency present when the generator 2 is in the efficient range and the first motor 3 is in the efficient range is selected for running, thereby maximizing power generation efficiency of the drive system 300.

If the power generation efficiency of the first motor 3 is greater than the total power generation efficiency present when the generator 2 is in the efficient range and the first motor 3 is in the efficient range, the drive system 300 may be controlled to switch to the second power generation mode, and the first motor 3 may be controlled to run at the second rotational speed and generate electricity, where the second rotational speed is greater than the rotational speed at which the first motor 3 is in the efficient range, so that the power generation capacity of the drive system 300 can meet the power generation requirement of the vehicle.

If the power generation efficiency of the first motor 3 is less than the total power generation efficiency present when the generator 2 is in the efficient range and the first motor 3 is in the efficient range, the drive system 300 may be controlled to switch to the third power generation mode, and the generator 2 and the first motor 3 each may be controlled to generate electricity in the efficient range. In this way, the generator 2 and the first motor 3 can generate electricity in the efficient range, and when the same fuel is consumed and the power generation requirement of the vehicle is met, energy conversion efficiency of the drive system 300 is the highest when the generator 2 and the first motor 3 generate electricity in the efficient range, thereby maximizing the energy utilization.

When the power generation requirement of the vehicle exceeds the maximum power generation capacity of the first motor 3, the power generation requirement of the vehicle cannot be met either by generating electricity only through the generator 2 or generating electricity only through the first motor 3. The drive system 300 needs to generate electricity through the generator 2 and the first motor 3 simultaneously, to meet the power generation requirement of the vehicle. In some embodiments, controlling, based on the maximum power generation capacity of the first motor 3, the drive system 300 to switch to the second power generation mode or the third power generation mode in the step S51 may further include the following step.
S7: when the power generation requirement of the vehicle exceeds the maximum power generation capacity of the first motor 3,
S71: control the drive system 300 to switch to the third power generation mode.

When the drive system 300 is in the third power generation mode, the generator 2 and the first motor 3 generate electricity simultaneously, so that the power generation requirement of the vehicle can be met. In this case, if the power generation requirement of the vehicle is less than a total power generation capacity present when the generator 2 is in the efficient range and the first motor 3 is in the efficient range, the generator 2 and the first motor 3 may generate electricity in the efficient range. When the same fuel is consumed and the power generation requirement of the vehicle is met, energy conversion efficiency of the drive system 300 is the highest when the generator 2 and the first motor 3 generate electricity in the efficient range, thereby maximizing the energy utilization.

If the power generation requirement of the vehicle exceeds a total power generation capacity present when the generator 2 is in the efficient range and the first motor 3 is in the efficient range, the power generation capacity of the generator 2 and the power generation capacity of the first motor 3 are increased, so that the generator 2 runs at the first rotational speed and generates power and/or the first motor 3 runs at the second rotational speed and generates power, where the first rotational speed is greater than the rotational speed at which the generator 2 is in the efficient range, and the second rotational speed is greater than the rotational speed at which the first motor 3 is in the efficient range. A higher rotational speed indicates more mechanical energy, so that more electric energy can be obtained through conversion, to meet the power generation requirement of the vehicle.

When a function of the foregoing integrated module is implemented in a form of hardware, an electronic device provided in an embodiment of the present invention may include a processor 202, a communication interface 203, and a bus 204. Optionally, the electronic device may further include a memory 201.

The processor 202 may implement or execute various example logical blocks, modules, and circuits that are described with reference to content disclosed in this application. The processor 202 may be a central processing unit, a general-purpose processor, a digital signal processor, an application-specific integrated circuit, a field-programmable gate array or another programmable logic device, a transistor logic device, a hardware component, or any combination thereof. The processor may implement or execute various example logical blocks, modules, and circuits that are described with reference to content disclosed in this application. Alternatively, the processor 202 may be a combination of processors implementing a computing function, for example, a combination including one or more microprocessors, or a combination of a DSP and a microprocessor.

The communication interface 203 is configured to connect to another device through a communication network. The communication network may be Ethernet, a radio access network, a wireless local area network (wireless local area network, WLAN), or the like.

The memory 201 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a magnetic disk storage medium or another magnetic storage device, or any other medium that can be configured to carry or store expected program code in a form of instruction or data structure and that can be accessed by a computer, but is not limited thereto.

In a possible implementation, the memory 201 may exist independently of the processor 202. The memory 201 may be connected to the processor 202 through the bus 204, and is configured to store instructions or program code. When invoking and executing the instructions or the program code stored in the memory 201, the processor 202 can implement the control method for the drive system 300 provided in embodiments of the present invention.

In another possible implementation, the memory 201 may alternatively be integrated with the processor 202.

The bus 204 may be an extended industry standard structure (extended industry standard architecture, EISA) bus or the like. The bus 204 may be classified into an address bus, a data bus, a control bus, and the like.

Based on the descriptions of the foregoing implementations, a person skilled in the art will clearly understand that, for the purpose of convenient and brief description, division into the foregoing functional modules is merely used as an example for description. During actual application, the foregoing functions may be allocated to different functional modules for implementation as required. In other words, an inner structure of a service invoking apparatus is divided into different functional modules to implement all or a part of the functions described above.

An embodiment of this application further provides a computer-readable storage medium. All or a part of the procedures in the foregoing method embodiments may be implemented by a computer program instructing related hardware. The program may be stored in the computer-readable storage medium. When the program is run, the procedures in the foregoing method embodiments may be included. The computer-readable storage medium may be the memory in any one of the foregoing embodiments. The computer-readable storage medium may alternatively be an external storage device of the foregoing service invoking apparatus, for example, a plug-in hard disk, a smart media card (smart media card, SMC), a secure digital (secure digital, SD) card, and a flash card (flash card) that are configured on the service invoking apparatus. Further, the computer-readable storage medium may further include both an internal storage unit and the external storage device of the service invoking apparatus. The computer-readable storage medium is configured to store the computer program and other programs and data that are required by the service invoking apparatus. The computer-readable storage medium may be further configured to temporarily store data that has been output or is to be output.

The vehicle provided in an embodiment of this application may include the foregoing electronic device or computer-readable storage medium.

An embodiment of this application further provides a computer program product. The computer product includes a computer program. When the computer program product runs on a computer, the computer is enabled to perform any one of the control methods for the drive system 300 provided in the foregoing embodiments.

In the descriptions of embodiments of this application, specific features, structures, materials, or characteristics may be combined as appropriate in any one or more embodiments or examples.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A drive system for a vehicle, and comprising:
a first transmission assembly (4), configured to be connected between an engine (1), a generator (2), and a first motor (3), wherein according to a power generation requirement of the vehicle, the first transmission assembly (4) selectively causes the engine (1) to drive the generator (2) and/or the first motor (3) to generate electricity, to enable the drive system to switch between a plurality of power generation modes.

2. The drive system according to claim 1, wherein according to the power generation requirement of the vehicle, the first transmission assembly (4) selectively causes the drive system to switch between a first power generation mode, a second power generation mode, and a third power generation mode,
in the first power generation mode, the first transmission assembly (4) connects the engine (1) to the generator (2) through transmission, to enable the engine (1) to drive the generator (2) to generate electricity;
in the second power generation mode, the first transmission assembly (4) connects the engine (1) to the first motor (3) through transmission, to enable the engine (1) to drive the first motor (3) to generate electricity; or
in the third power generation mode, the first transmission assembly (4) connects the engine (1) to the generator (2) and the first motor (3) through transmission, to enable the engine (1) to drive the generator (2) and the first motor (3) to generate electricity.

3. The drive system according to claim 2, wherein
the first transmission assembly (4) is capable of switching between a first state and a second state; and
in the first state, the first transmission assembly (4) connects the engine (1) to the generator (2) through transmission, to enable the drive system to be in the first power generation mode; or in the second state, the first transmission assembly (4) connects the engine (1) to the generator (2) through transmission, and connects the engine (1) to the first motor (3) through transmission, to enable the drive system to be in the second power generation mode or the third power generation mode.

4. The drive system according to claim 3, wherein the drive system further comprises:
a control apparatus (5), configured to be connected to the generator (2); and
in the second state, the engine (1) drives the first motor (3) to generate electricity, and the control apparatus (5) controls the generator (2) not to generate electricity, to enable the drive system to be in the second power generation mode; or in the second state, the engine (1) drives the first motor (3) to generate electricity, and the control apparatus (5) controls the generator (2) to generate electricity, to enable the drive system to be in the third power generation mode.

5. The drive system according to claim 3 or 4, further comprising:
a first set of wheel ends (7), configured to be connected to a first set of wheels (8) of the vehicle, wherein
the first transmission assembly (4) is further connected to the first set of wheel ends (7), to enable the engine (1) and/or the first motor (3) to drive, through the first transmission assembly (4), the first set of wheel ends (7) to rotate.

6. The drive system according to claim 5, wherein the first transmission assembly (4) comprises:
a first coupling apparatus (6), wherein the first coupling apparatus (6) comprises a first coupling portion (61) and a second coupling portion (62); the first coupling portion (61) is connected between the engine (1) and the generator (2), and the second coupling portion (62) is in transmission connection to the first motor (3); and the second coupling portion (62) is capable of being connected to or separated from the first coupling portion (61), to enable the first transmission assembly (4) to switch between the first state and the second state.

7. The drive system according to claim 6, wherein the first transmission assembly (4) further comprises:
a first transmission structure (41), wherein an input member (411) of the first transmission structure is in transmission connection to the second coupling portion (62), and an output member (412) of the first transmission structure is in transmission connection to the first motor (3);
a second transmission structure (42), wherein an output member (422) of the second transmission structure is in transmission connection to the first set of wheel ends (7); and
a second coupling apparatus (9), connected between the output member (412) of the first transmission structure and an input member (421) of the second transmission structure.

8. The drive system according to claim 3, wherein the first transmission assembly (4) has a third state; and
in the third state, the first transmission assembly (4) connects the engine (1) to the first motor (3) through transmission, and disconnects the engine (1) from the generator (2), to enable the drive system to be in the second power generation mode.

9. The drive system according to claim 2, further comprising:
a second set of wheel ends (11), configured to be connected to a second set of wheels (12) of the vehicle; and
a second transmission assembly (13), wherein the second transmission assembly (13) is configured to be connected between a second motor (10) and the second set of wheel ends (11),
preferably further comprising:
a battery pack (14), wherein the battery pack (14) is configured to be connected to the generator (2), the first motor (3) and the second motor (10),
more preferably further comprising:
a control apparatus (5), configured to be connected to the generator (2), the first motor (3), the second motor (10), and the battery pack (14), and is configured to: in the first power generation mode, transmit the electricity generated by the generator (2) to the battery pack (14); in the second power generation mode, transmit the electricity generated by the first motor (3) to the battery pack (14); or in the third power generation mode, transmit the electricity generated by the generator (2) and the first motor (3) to the battery pack (14), and be capable of transmitting the electricity from the battery pack (14) to the first motor (3) and/or the second motor (10).

10. A control method for a drive system, applied to the drive system (300) according to any one of claims 1 to 9, wherein the control method comprises:
controlling, according to a power generation requirement of a vehicle, the drive system (300) to switch between a plurality of power generation modes.

11. The control method according to claim 10, wherein the first transmission assembly (4) enables the drive system to have a first power generation mode, a second power generation mode, and a third power generation mode; and
controlling, according to the power generation requirement of the vehicle, the drive system (300) to switch between the plurality of power generation modes comprises: controlling, according to the power generation requirement of the vehicle, the drive system (300) to switch between the first power generation mode, the second power generation mode, and the third power generation mode,
preferably wherein controlling, according to the power generation requirement of the vehicle, the drive system (300) to switch between the first power generation mode, the second power generation mode, and the third power generation mode comprises:
when the power generation requirement of the vehicle is less than a power generation capacity of the generator (2) in an efficient range, controlling the drive system (300) to switch to the first power generation mode, and controlling the generator (2) to generate electricity in the efficient range of the generator (2),
more preferably wherein controlling, according to the power generation requirement of the vehicle, the drive system (300) to switch between the first power generation mode, the second power generation mode, and the third power generation mode further comprises:
when the power generation requirement of the vehicle exceeds the power generation capacity of the generator (2) in the efficient range,
if the first motor (3) is in a driving operating state, controlling the drive system (300) to switch to the first power generation mode, and controlling the generator (2) to run at a first rotational speed and generate electricity, wherein the first rotational speed is greater than a rotational speed at which the generator (2) is in the efficient range; or
controlling, if the first motor (3) is not in a driving operating state, the drive system (300) to switch to the second power generation mode or the third power generation mode,
most preferably wherein controlling, if the first motor (3) is not in the driving operating state, the drive system (300) to switch to the second power generation mode or the third power generation mode comprises:
when the power generation requirement of the vehicle is less than a power generation capacity of the first motor (3) in an efficient range, controlling the drive system (300) to switch to the second power generation mode, and controlling the first motor (3) to generate electricity in the efficient range of the first motor (3),
optionally wherein controlling, if the first motor (3) is not in the driving operating state, the drive system (300) to switch to the second power generation mode or the third power generation mode further comprises:
when the power generation requirement of the vehicle exceeds the power generation capacity of the first motor (3) in the efficient range, controlling, based on a maximum power generation capacity of the first motor (3), the drive system (300) to switch to the second power generation mode or the third power generation mode,
and further wherein controlling, based on the maximum power generation capacity of the first motor (3), the drive system (300) to switch to the second power generation mode or the third power generation mode comprises:
when the power generation requirement of the vehicle is less than the maximum power generation capacity of the first motor (3), comparing power generation efficiency of the first motor (3) with total power generation efficiency present when the generator (2) is in the efficient range and the first motor (3) is in the efficient range; and
if the power generation efficiency of the first motor (3) is greater than the total power generation efficiency present when the generator (2) is in the efficient range and the first motor (3) is in the efficient range, controlling the drive system (300) to switch to the second power generation mode, and controlling the first motor (3) to run at a second rotational speed and generate electricity, wherein the second rotational speed is greater than a rotational speed at which the first motor (3) is in the efficient range; or
if the power generation efficiency of the first motor (3) is less than the total power generation efficiency present when the generator (2) is in the efficient range and the first motor (3) is in the efficient range, controlling the drive system (300) to switch to the third power generation mode, and controlling each of the generator (2) and the first motor (3) to generate electricity in the efficient range
such as wherein controlling, based on the maximum power generation capacity of the first motor (3), the drive system (300) to switch to the second power generation mode or the third power generation mode further comprises:
when the power generation requirement of the vehicle exceeds the maximum power generation capacity of the first motor (3), controlling the drive system (300) to switch to the third power generation mode.

12. An electronic device, comprising a processor, the processor being connected to a memory, the memory is configured to store computer instructions, and the computer instructions are loaded and executed by the processor, to enable the electronic device to implement the control method according to any one of claims 10 to 11.

13. A computer-readable storage medium, wherein the computer-readable storage medium stores computer instructions, and when the computer instructions are run on a computer, the computer is enabled to perform the control method according to any one of claims 10 to 11.

14. A vehicle, comprising: the drive system (300) according to any one of claims 1 to 11, the electronic device according to claim 12, or the computer-readable storage medium according to claim 13.

15. A computer program product, wherein the computer program product comprises computer instructions, and when the computer instructions are run on a computer, the computer is enabled to perform the control method according to any one of claims 10 to 11.
